Europäisches Patentamt

European Patent Office

Office européen des brevets

(19)

(11) Veröffentlichungsnummer : **0 024 330 B1**

# (12) EUROPÄISCHE PATENTSCHRIFT

(45) Veröffentlichungstag der Patentschrift :
09.03.83

(21) Anmeldenummer : 80104628.5

(22) Anmeldetag : 06.08.80

(51) Int. Cl.$^3$ : **B 29 D 27/02, B 29 B 1/06**

(54) Verfahren zum Herstellen von Formteilen aus einem Mehrkomponentenreaktionsgemisch.

(30) Priorität : 18.08.79 DE 2933553

(43) Veröffentlichungstag der Anmeldung :
04.03.81 Patentblatt 81/09

(45) Bekanntmachung des Hinweises auf die Patenterteilung : 09.03.83 Patentblatt 83/10

(84) Benannte Vertragsstaaten :
DE FR GB

(56) Entgegenhaltungen :
DE A 2 132 381
DE A 2 645 937
DE A 2 817 687
DE B 2 513 492
FR A 2 158 735
GB A 1 071 081
GB A 2 004 194

(73) Patentinhaber : BAYER AG
Zentralbereich Patente, Marken und Lizenzen
D-5090 Leverkusen 1, Bayerwerk (DE)

(72) Erfinder : Boden, Heinrich
Sperberweg 14
D-5090 Leverkusen 3 (DE)
Erfinder : Rentz, Bernhard
Halenseestrasse 5
D-5090 Leverkusen (DE)
Erfinder : Niggemann, Johann
Gutenbergstrasse 5
D-5090 Leverkusen (DE)
Erfinder : Just, Gerhard
Finkenweg 2
D-5653 Leichlingen (DE)

Verfahren zum Herstellen von Formteilen aus einem Mehrkomponentenreaktionsgemisch

Die Erfindung bezieht sich auf ein Verfahren zum Herstellen von Formteilen aus Mehrkomponentenreaktionsgemischen, welche beispielsweise Polyurethan, Epoxiharz, Polyesterharz oder Polyamid bilden, wobei in mindestens zwei getrennten Vormischzonen fließfähige Mehrkomponentenreaktionsgemische erzeugt werden, welche in einer Nachmischzone miteinander vermischt werden.

Dosier- und Mischeinrichtungen, die mit Niederdruck oder Hochdruck arbeiten, sind hinlänglich bekannt. In Sonderausführungen ermöglichen derartige Einrichtungen die kontrollierte Veränderung der Dosiergeschwindigkeit für eine oder mehrere Reaktionskomponenten während des Dosiervorganges. Hierbei wird beispielsweise eine Änderung des stöchiometrischen Mengenverhältnisses oder ein kontinuierlicher Austausch einer Reaktionskomponente gegen eine andere vorgenommen, um im resultierenden Formteil Zonen mit unterschiedlichen Eigenschaften zu erzeugen.

Beispielsweise werden bei einer Niederdruckdosiereinrichtung, die mit einem Rührwerk ausgestattet ist, alle Reaktionskomponenten in die großvolumige Rührwerksmischkammer eingespeist und in dieser in einer Stufe vermischt. Eine Vorvermischung von Reaktionskomponenten in einem vorgewählten, exakten Dosierverhältnis zu einem Mehrkomponentenreaktionsgemisch und die im Dosierverhältnis zueinander gesteuerte Nachvermischung mit mindestens einem zweiten, ebenfalls im stöchiometrisch exakten Mengenverhältnis dosierten und vorvermischten Mehrkomponentenreaktionsgemisch ist mit der beschriebenen Einrichtung nicht möglich. Darüber hinaus sind Niederdruckrührwerksmischer nur dann für die intermittierende Fertigung von beispielsweise massiven, blasenfreien Formteilen verwendbar, wenn niedrig aktivierte Reaktionsgemische verarbeitet werden, die keine Zwischenspülung der Mischkammer zwischen zwei Formfüllvorgängen erfordern. Ist eine physiologisch bedenkliche und materialintensive Mischkammerspülung notwendig, so wird zu Beginn eines jeden Mischvorganges die in der großvolumigen Mischkammer vorhandene Luft in das Reaktionsgemisch eingeschlagen. Die Folge sind Blasen und eine teilweise, zumindest bei Beginn jedes Füllvorganges schaumige Struktur, die das Formteil unbrauchbar machen. Ein weiterer Nachteil ist die leck- und druckempfindliche Rührerwellenabdichtung von Rührwerksmischern.

Die zur Zeit auf dem Markt anzutreffenden Hochdruckdosiereinrichtungen lassen zwar sowohl eine Änderung der Dosiergeschwindigkeit einzelner Reaktionskomponenten zueinander als auch eine kontinuierlich synchrone Änderung der Dosiergeschwindigkeit mehrerer Reaktionskomponenten bei konstantem Dosierverhältnis zu. Die zugeordneten zur Zeit gebräuchlichen Injektionsmischköpfe sind aber in ihren Einspritz- und Mischbedingungen beispielsweise durch vorgewählte, fest eingestellte Injektionsdüsenquerschnitte auf weitgehend konstante Dosiergeschwindigkeit und Viskosität der Reaktionskomponenten abgestimmt. Das hat zur Folge, daß z. B. eine starke Reduzierung der Dosiergeschwindigkeit einer Reaktionskomponente bei konstantem Düsenquerschnitt am Mischkammereintritt zwangsläufig einen entsprechenden Abfall im Dosierdruck und damit in der Mischenergie nach sich zieht. Die Vermischung der Reaktionskomponenten in der Injektionskammer ist nicht mehr einwandfrei. Solche Injektionsmischeinrichtungen in selbstreinigender Ausführung haben in Verbindung mit Hochdruckdosiereinrichtungen gegenüber Niederdruckeinrichtungen bekanntlich den Vorteil, daß hochaktivierte Reaktionssysteme mit Verfestigungszeiten von minimal einer Sekunde verarbeitet werden können, daß eine Mischkammerspülung überflüssig ist, daß das Mischkammervolumen, in der Größe von einigen Kubikzentimetern, extrem kleingehalten werden kann und infolgedessen von Schußbeginn bis Schußende — falls erforderlich — massive, weitgehend luftblasenfreie Reaktionsmischungen hergestellt werden können. Auch ist die Vermischung von zur Zeit maximal sechs Reaktionskomponenten in einem Mischkopf unter den oben beschriebenen weitgehend konstanten Dosierbedingungen möglich. Möchte man diese Bedingungen während des Mischvorganges jedoch ändern, so sind die Resultate für die Praxis unzureichend.

Aufgabe der Erfindung ist es, ein Verfahren für die Herstellung von Formteilen aus Mehrkomponentenreaktionswerkstoffen zu schaffen, mit dessen Hilfe fließfähige, erforderlichenfalls über Hochdruckpumpen dosierbare, gegebenenfalls füllstoffhaltige Reaktionskomponenten sowie gegebenenfalls fließfähige Zusatzstoffe auf eine solche Weise miteinander vermischt werden, daß eine weitgehende Einflußnahme auf den Dosier- und Mischvorgang möglich ist.

Diese Aufgabe wird dadurch gelöst, daß in den Vormischzonen unterschiedliche, reaktionsfähige Mehrkomponentenreaktionsgemische erzeugt werden, die anschließend in der Nachmischzone zu einer zu dem gewünschten Endprodukt führenden weiteren Reaktion gebracht werden.

Dadurch wird erreicht, daß zwei oder mehr reaktive Vorgemische erzeugt werden können, wobei die Intensität bei deren Nachvermischung sehr gut steuerbar ist. Das erfindungsgemäße Verfahren ermöglicht es beispielsweise, daß zumindest bei der Verarbeitung hochreaktiver Systeme zunächst eine Vorvermischung der zueinander im richtigen Mengenverhältnis dosierten Reaktionskomponenten und der erwünschte Reaktionsbeginn zwischen diesen Reaktionspartnern eingeleitet werden kann. Erst wenn diese Partner sich gefunden haben, wird das resultierende Reaktionsgemisch in der zweiten Mischstufe, die als Nachmischzone bezeichnet wird, in noch fließfähigem Zustand im Status nascendi mit einem anderen, unter ähnlichen Bedingungen hergestellten Reaktionsgemisch zusammentreffen. Vor Eintritt der verschiedenen Reaktionsgemische in die Nachmischzone sind damit die erwünschten Verbindungen zwischen den zueinander passenden Reaktionspartnern schon weitgehend geknüpft. In der zweiten Mischstufe, d. h. in der Nachmischzone, wird ein Gemenge aus diesen Reaktionsgemischen entstehen. Durch diese Aufteilung in zwei oder mehr parallele Vormischzonen einer ersten Stufe und in mindestens eine gemeinsame Nachmischzone einer zweiten Stufe bestehen für den Fachmann erheblich mehr Einflußmöglichkeiten, und es sind bessere Resultate zu erwarten. Regellose, zufällige Verbindungen, die beim gleichzeitigen Zusammenführen aller Reaktionskomponenten in eine einzige Mischzone im allgemeinen auftreten, lassen sich mit dem erfindungsgemäßen Verfahren vermeiden. Die Vormischzone dient also nicht der Herstellung eines Gemisches aus zueinander inaktiven Partnern, sondern aus Komponenten, die bereits in dieser Stufe miteinander reagieren. Dies schließt nicht aus, daß dem Vorgemisch oder einer Komponente für das Vorgemisch Füllstoffe beigegeben werden oder auch sonstige Zusatzstoffe, die erst in der Nachmischzone mit dem zweiten Reaktionsgemisch reagieren.

Es ist dabei überraschend, daß es möglich ist, zwei oder mehr reaktive Vorgemische so aufeinander abzustimmen, daß diese Gemische im Augenblick des Zusammenführens eine weitere Reaktion ausführen und schließlich das Endprodukt bilden.

Es versteht sich, daß beim Vorhandensein einer größeren Zahl von parallelen Vormischstufen auch mehrere Nachmischstufen parallel geschaltet werden können, die die so erzeugten Zwischengemische schließlich in eine dritte Mischstufe entlassen. Auch sind mehrere hintereinander geschaltete Nachmischstufen für das Vorgemisch bzw. für ein Zwischengemisch möglich.

Es ist zwar aus DE-A-26 45 937 eine Hochdruckinjektionsmischvorrichtung für Mehrkomponentenkunststoffe bekannt, welche mindestens zwei sich gegenüberliegende, parallel arbeitende Mischvorrichtungen, deren Mischkammeraustritte in einen Transferzylinder größeren Durchmessers mit Ausstoßkolben münden, aufweist, wobei in dem Transferzylinder, welcher der Strömungsberuhigung dienen soll, auch eine Nachvermischung stattfindet, zumal auch noch die Zudosierung von Zuschlagstoffen an dieser Stelle vorgesehen ist.

Bei diesem Stand der Technik dienen aber die einzelnen Mischvorrichtungen zum Herstellen des gleichen Reaktionsgemisches, und zwar unter dem Gesichtspunkt, auch für die Erzeugung großer Gemischmengen pro Zeiteinheit eine einwandfreie Injektionsvermischung dadurch sicherzustellen, daß man durch das Parallelarbeiten mehrerer Mischvorrichtungen kleine Mischkammerdurchmesser — und damit geringen Abstand der Injektionsdüsen — beibehalten kann. Ein Hinweis auf die Herstellung verschiedenartiger Reaktionsgemische in den parallel arbeitenden einzelnen Mischvorrichtungen wird weder durch die vorbekannte Aufgabenstellung noch durch die Lösung jener Aufgabe gegeben.

Das neue Verfahren bietet in seiner Breite dem Fachmann mehrere Alternativen der weiteren Ausgestaltung.

Nach einem ersten Vorschlag wird das Dosierverhältnis wenigstens der in eine der Vormischzonen eingebrachten Reaktionskomponenten konstant gehalten.

Selbstverständlich kann auch das Dosierverhältnis aller in die Vormischzonen eingebrachten Reaktionskomponenten während des Mischvorganges verändert werden. Da dies bei den an sich schon schwierig zu handhabenden Komponenten außerordentlich genau durchgeführt werden müßte, empfiehlt es sich — wie vorgeschlagen — vorzugsweise das Dosierverhältnis der in eine der Vormischzonen eingebrachten Reaktionskomponenten sozusagen als Bezugskomponente konstant zu halten.

Nach einem weiteren Vorschlag wird mindestens eines der erzeugten Reaktionsgemische zeitversetzt in die Nachmischzone eingebracht und nur während eines vorgegebenen Zeitintervalls mit einem weiteren Reaktionsgemisch in der Nachmischzone vermischt.

Diese Verfahrensweise bringt den außerordentlichen Vorteil, daß beispielsweise bei der Fertigung von Formteilen, die mit Zonen unterschiedlicher Eigenschaften ausgestattet sein sollen, beispielsweise zunächst in der ersten Vormischzone ein Reaktionsgemisch erzeugt wird, das in der Nachmischzone zunächst lediglich eine Nachvermischung mit sich selbst erfährt, bis zu einem gewünschten Zeitpunkt aus der zweiten Vormischzone ein anderes Reaktionsgemisch gleichzeitig in die Nachmischzone eingespeist wird und dort mit dem aus der ersten Vormischzone eingespeisten Reaktionsgemisch eine intensive Verwirbelung erfährt. Schließlich kann der Vormischvorgang für beide Vorgemische gleichzeitig beendet werden oder das eine oder andere Reaktionsgemisch kann noch für einen weiteren Zeitraum allein erzeugt und über die Nachmischzone in das Formwerkzeug entlassen werden.

Eine weitere Variante des erfindungsgemäßen Verfahrens besteht darin, daß mindestens zwei erzeugte Vorgemische zeitsynchron der Nachmischzone zugeführt und miteinander vermischt werden. Diese Variante wird besonders dann empfohlen, wenn außerordentlich empfindliche Komponenten zu verarbeiten sind, um möglichst wenig Anhaltspunkte für Störfaktoren zu geben.

Eine besondere Durchführungsform des Verfahrens ist dahingehend, daß die Dosiergeschwindigkeit mindestens von zwei erzeugten Reaktionsgemischen beim Einströmen in die Nachmischzone konstant gehalten wird.

Diese Maßnahme gestattet die Zuführung verschiedener Reaktionsgemische in unterschiedlichen Mengenverhältnissen bzw. unter verschiedenen Einspritzdrücken.

Auch hier gilt der Grundsatz, die an sich vorhandenen Möglichkeiten im Sinne einer sicheren Handhabung im Einzelfalle zu begrenzen. Dabei können die Dosiergeschwindigkeiten der einzelnen Reaktionsgemische in die Nachmischkammer unterschiedlich sein.

Schließlich läßt sich noch die Dosiergeschwindigkeit mindestens eines der erzeugten Reaktionsgemische während des Einbringens in die Nachmischzone vorteilhafterweise verändern.

Diese Variante erlaubt die Herstellung von Formteilen mit unterschiedlichen Eigenschaften über verschiedene Zonen.

Das neue Verfahren wird anhand von drei zu seiner Durchführung geeigneten, in der Zeichnung rein schematisch dargestellten und nachstehend näher beschriebenen Einrichtungen erläutert. Es zeigen :

Figur 1 eine Einrichtung, die selbstreinigend arbeitet und zusätzlich mit einem dynamischen Nachmischer ausgestattet ist,

Figur 2 eine zweite Ausführungsform der Einrichtung mit einer dynamischen Nachmischvorrichtung und

Figur 3 eine dritte Ausführungsform der Einrichtung mit selbstreinigenden Vormischkammern und entformbarer Nachmischkammer.

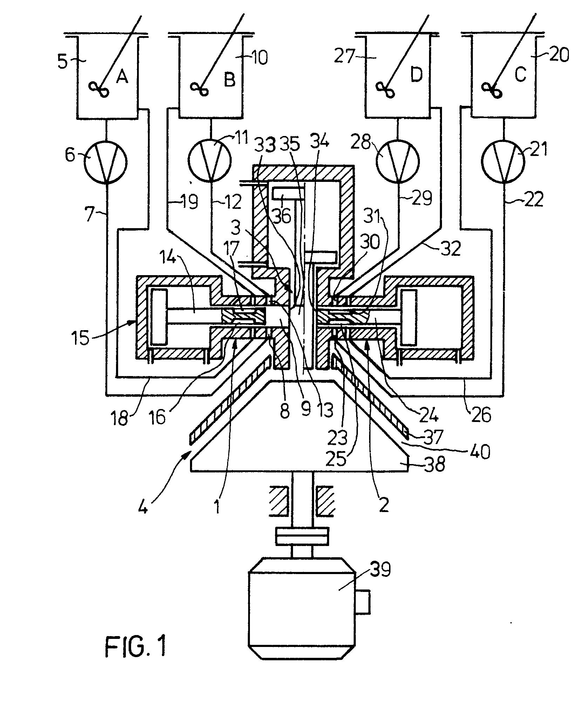

In Fig. 1 besteht die Einrichtung aus den funktionstechnisch parallel zueinander angeordneten Vormischvorrichtungen 1, 2, der nachgeordneten Nachmischvorrichtung 3 und einem zusätzlichen dynamischen Nachmischer 4, wie er für die Fertigung von Fahrzeugreifen besonders geeignet ist, weil er gleichzeitig zum Verteilen des Gemisches in das charakteristische Formwerkzeug dient.

Aus einem Vorratsbehälter 5 strömt die Komponente A über eine Dosierpumpe 6, die in einer Zuleitung 7 angeordnet ist, zur Vormischvorrichtung 1 und wird über eine Einspritzöffnung 8 in die Vormischkammer 9 injiziert. In ähnlicher Weise gelangt die Komponente B aus dem Vorratsbehälter 10 über eine Dosierpumpe 11, die in einer Zuleitung 12 angeordnet ist, zur Vormischvorrichtung 1 und tritt über eine Einspritzöffnung 13 in die Vormischkammer 9 ein. In der Vormischkammer 9 ist ein Reinigungskolben 14 mittels eines hydraulischen Antriebs 15 verschiebbar geführt. Im Reinigungskolben 14 angeordnete Rücklaufnuten 16, 17 können die Einspritzöffnungen 8, 13 in der Reinigungsstellung des Kolbens 14 mit den Rücklaufleitungen 18, 19 verbinden, die in die Vorratsbehälter 5, 10 münden.

Aus einem Vorratsbehälter 20 strömt die Komponente C über eine Dosierpumpe 21, die in einer Zuleitung 22 angeordnet ist, zur Vormischvorrichtung 2 und wird über eine Einspritzöffnung 23 injiziert. Nur der besseren Anschaulichkeit halber ist bei der Vormischvorrichtung 2 der Reinigungskolben 24 in der Reinigungsstellung dargestellt, so daß die Einspritzöffnung 23 in eine Rücklaufnut 25 mündet, von wo aus die Komponente C über eine Rücklaufleitung 26 zurück in den Vorratsbehälter 20 strömt. In ähnlicher Weise gelangt die Komponente D aus einem Vorratsbehälter 27 über eine Dosierpumpe 28, die in einer Zuleitung 29 angeordnet ist, zur Vormischvorrichtung 2 und tritt über eine Einspritzöffnung 30 in eine Rücklaufnut 31 ein, an die eine Rücklaufleitung 32 anschließt. Diese mündet in den Vorratsbehälter 27.

Die Komponenten gelangen aus der Vormischkammer 9 und der zur Vormischvorrichtung 2 gehörigen Vormischkammer, die jedoch in der Darstellung durch den Reinigungskolben 24 ausgefüllt ist, durch die Auslässe 33, 34 in eine Nachmischkammer 35 der Nachmischvorrichtung 3. In dieser ist ein Ausstoßkolben 36 geführt. Seine linke Hälfte ist in Mischstellung gezeigt, seine rechte in Ausstoßstellung.

Aus der Nachmischkammer 35 strömt das aus den Vorgemischen erzeugte Reaktionsgemisch in den zusätzlichen dynamischen Nachmischer 4, so daß die Nachvermischung in zwei Stufen erfolgt. Dieser besteht aus zwei rotationssymmetrischen Leittellern 37, 38, von denen einer starr mit der Nachmischvorrichtung 3 verbunden ist und der andere mit einem Rotationsantrieb 39 versehen ist. Die beiden Leitteller 37, 38 sind koaxial zur Achse der Nachmischvorrichtung 3 angeordnet und bilden zwischen sich einen Mischspalt 40. Dieser dient gleichzeitig zum Zuführen des Reaktionsgemisches in das nicht-dargestellte Formwerkzeug.

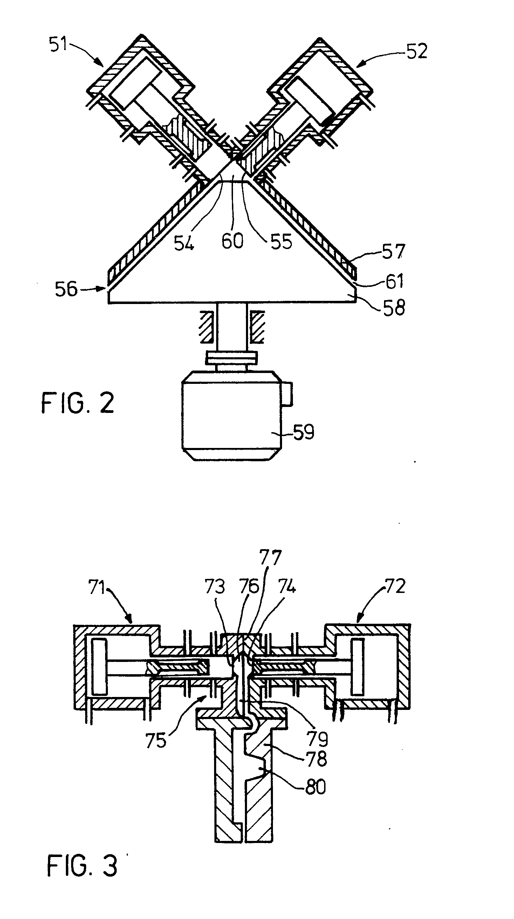

In Fig. 2 entspricht der Aufbau der Vormischvorrichtungen 51, 52 denjenigen in Fig. 1. Sie sind deshalb hier nicht mehr näher beschrieben. Der einzige Unterschied besteht darin, daß die Vormischvorrichtungen 51, 52 unter einem Winkel von 90° zueinander angeordnet sind und daß ihre Auslässe 54, 55 in eine Injektionsnachmischkammer 60 münden, die keinen Ausstoßkolben benötigt und direkt in eine dynamische Nachmischvorrichtung 56 übergeht, wie sie in Fig. 1 als zusätzliches Aggregat dargestellt ist. Die Nachmischvorrichtung 56 besteht aus zwei koaxialen kegelförmigen Tellern 57, 58, von denen der Teller 57 starr mit den Vormischvorrichtungen 51, 52 verbunden ist. Der Teller 58 ist mit einem Rotationsantrieb 59 versehen und seine Spitze ist abgestumpft. Hier liegt die Injektionsnachmischkammer 60, die sich in den zwischen den Tellern 58, 57 gebildeten Mischspalt 61 der dynamischen Nachmischvorrichtung 56 fortsetzt.

Auch in Fig. 3 entsprechen die Vormischvorrichtungen 71, 72 denjenigen gemäß Fig. 1. Die als Drosseln ausgebildeten Auslässe 73, 74 der Mischvorrichtungen 71, 72 münden jedoch in eine Nachmischvorrichtung 75, durch deren Nachmischkammer 76 eine Formtrennebene 77 eines Formwerkzeuges 78 hindurchgeht. Von der Nachmischkammer 76 führt ein Angießkanal 79 in den Hohlraum 80 des Formwerkzeuges 78. Beim Öffnen des Formwerkzeuges 78 kann der in der Nachmischkammer 76 und im Angießkanal 79 ausgehärtete Gemischrest mit dem Formteil zusammen entformt werden.

Bei der Vorrichtung nach Fig. 3 läßt sich in bekannter Weise im Angießkanal ein weiterer statischer Nachmischer anordnen.

Die Ausführung der Injektionsvormischer 1, 2 ; 51, 52 ; 71, 72 ist nicht auf die in den Fig. 1, 2 und 3 dargestellten Beispiele beschränkt. Hier können alle Injektionsmischer für Mehrkomponentenreaktionssysteme eingesetzt werden, insbesondere wenn sie selbstreinigend ausgebildet sind. Solche Mischköpfe sind in verschiedenen Ausführungsformen, insbesondere als Anbaumischköpfe, bekannt.

## Beispiele

Es wurden zwei Beispiele aufgestellt, von denen Beispiel 1 das neue Verfahren betrifft und Beispiel 2 sich zum Vergleich auf eine herkömmliche Methode bezieht.

Hierbei wurde je ein hochaktiviertes PUR-Mehrkomponenten-Reaktionssystem zur Herstellung von Formteilen geringer und hoher Steifigkeit gleichzeitig und in verschiedenem Dosierverhältnis zueinander verarbeitet. In Beispiel 1 (Versuche 1.1 bis 1.3) wurde eine mehrstufige Mischvorrichtung nach Fig. 3 verwendet. In Beispiel 2 (Versuche 2.1 bis 2.3) wurden die beteiligten vier Reaktionskomponenten in eine konventionelle, einstufige Injektionsmischvorrichtung (ähnlich den in den Fig. 1 bis 3 beschriebenen Vormischern 1, 2 ; 51, 52 ; 71, 72) vermischt. Diese Mischvorrichtung war in diesem Falle in bekannter Weise mit vier Einspritzdüsen in einer Ebene für die vier Reaktionskomponenten ausgerüstet und über einen Angießkanal mit dem Formwerkzeughohlraum verbunden. Die mechanischen Eigenschaften der resultierenden Formteile aus beiden Beispielen sind in Tabelle 1 zusammengefaßt.

Folgende Reaktionskomponenten wurden verwendet :

### Reaktionsgemisch R1 (weiche Einstellung) :

Komponente A1 :

94 Gewichtsteile eines aktivierten und stabilisierten Polyolgemisches (OH-Zahl : 211, Viskosität bei 25 °C : 700 mPas)

4 Gewichtsteile Monofluortrichlormethan

2 Gewichtsteile Dichlormethan.

Komponente B1 :

Polyisocyanat (Carbodiimidgruppen aufweisendes 4,4'-Diisocyanatodiphenylmethan ; NCO-Gehalt : 26,5 %, Viskosität bei 25 °C : 80 mPas).

### Reaktionsgemisch R2 (harte Einstellung) :

Komponente A2 :

Aktiviertes und stabilisiertes Polyolgemisch (OH-Zahl : 426, Viskosität bei 25 °C : 1 500 mPas).

Komponente B2 :

95 Gewichtsteile eines Polyisocyanates (Carbodiimidgruppen aufweisendes 4,4'-Diisocyanatodiphenylmethan ; NCO-Gehalt : 26,5%, Viskosität bei 25 °C : 80 mPas)

5 Gewichtsteile Dichlormethan.

### Dosierverhältnisse :

Reaktionsgemisch R1 :

A1 : B1 = 100 Gewichtsteile : 63 Gewichtsteile Reaktionsgemisch R2 :

A2 : B2 = 100 Gewichtsteile : 133 Gewichtsteile

Folgende Arbeitsparameter wurden bei allen Versuchen konstant gehalten :

| | | |
|---|---|---|
| Dosierdrücke : | alle Komponenten | 170 bis 180 bar |
| Rohstofftemperatur : | alle Komponenten | ca. 35 °C |
| Gesamtdosiergeschwindigkeit : | | 350 g/sec |
| Strömungsgeschwindigkeit im Angießkanal : | | 4,5 m/sec |
| Formwerkzeug : | Alu-Werkzeug, | |
| | Innenmaße : | 700 × 200 × 4 mm |
| Formwerkzeugtemperatur : | | 60 °C |

## Beispiel 1

Versuch 1.1

Mehrstufige Mischvorrichtung nach Fig. 3

1 Teil Reaktionsgemisch R1

2 Teile Reaktionsgemisch R2

Versuch 1.2

Mehrstufige Mischvorrichtung nach Fig. 3

5

1 Teil Reaktionsgemisch R1
1 Teil Reaktionsgemisch R2

Versuch 1.3
Mehrstufige Mischvorrichtung nach Fig. 3
2 Teile Reaktionsgemisch R1
1 Teil Reaktionsgemisch R2

Beispiel 2

Versuch 2.1
Mischkopf mit vier Einspritzdüsen für vier Reaktionskomponenten
1 Teil Reaktionsgemisch R1
2 Teile Reaktionsgemisch R2

Versuch 2.2
Mischkopf mit vier Einspritzdüsen für vier Reaktionskomponenten
1 Teil Reaktionsgemisch R1
1 Teil Reaktionsgemisch R2

Versuch 2.3
Mischkopf mit vier Einspritzdüsen für vier Reaktionskomponenten
2 Teile Reaktionsgemisch R1
1 Teil Reaktionsgemisch R2

Tabelle 1

Mechanische Eigenschaften von Formteilen, die durch gleichzeitige Vermischung zweier, verschiedener PUR-Mehrkomponenten-Reaktionssysteme hergestellt wurden :

| Versuch-Nr. | | 1.1 | 2.1 | 1.2 | 2.2 | 1.3 | 2.3 | |
|---|---|---|---|---|---|---|---|---|
| Reaktionsgemische | R2 (hart) | R1 : R2 = 1 : 2 | R1 : R2 = 1 : 2 | R1 : R2 = 1 : 1 | R1 : R2 = 1 : 1 | R1 : R2 = 2 : 1 | R1 : R2 = 2 : 1 | R1 (weich) |
| Mischsystem einstufig | x | | x | | x | | x | x |
| mehrstufig | | x | | x | | x | | |
| Rohdichte (kg/m³) nach DIN 53 420 | 1 148 | 1 130 | 1 129 | 1 124 | 1 105 | 1 116 | 1 024 | 1 006 |
| Zugfestigkeit (MPa) nach DIN 53 504 | 32,6 | 25,7 | 24,5 | 22,7 | 21 | 20,4 | 16,1 | 13,3 |
| Bruchdehnung (%) nach DIN 53 504 | 150 | 160 | 167 | 161 148 134 | 174 | 185 | 187 | 224 |
| Härte Shore-A nach DIN 53 505 | 98 | 98 | 97 | 97 | 97 | 97 | 97 | 91 |
| Härte Shore-D nach DIN 53 505 | 69 | 62 | 58 | 58 | 53 | 51 | 46 | 34 |
| Zugspannung bei 50 % Dehnung (MPa) nach DIN 53 504 | 27,7 | 19,3 | 17 | 16,3 | 13,6 | 12,1 | 9,9 | 6,3 |

**Ansprüche**

1. Verfahren zum Herstellen von Formteilen aus Mehrkomponentenreaktionsgemischen, welche beispielsweise Polyurethan, Epoxiharz, Polyesterharz oder Polyamid bilden, wobei in mindestens zwei getrennten Vormischzonen (1, 2, 9 ; 51, 52 ; 71, 72) fließfähige Mehrkomponentenreaktionsgemische erzeugt werden, welche in einer Nachmischzone (3, 35 ; 56, 60, 61 ; 75, 76) miteinander vermischt werden, dadurch gekennzeichnet, daß in den Vormischzonen (1, 2, 9 ; 51, 52 ; 71, 72) unterschiedliche, reaktionsfähige Mehrkomponentenreaktionsgemische erzeugt werden, die anschließend in der Nachmischzone (3, 35 ; 56, 60, 61 ; 75, 76) zu einer zu dem gewünschten Endprodukt führenden weiteren Reaktion gebracht werden.

2. Verfahren nach Anspruch 1, dadurch gekennzeichnet, daß das Dosierverhältnis wenigstens der in eine der Vormischzonen (1, 2, 9 ; 51, 52 ; 71, 72) eingebrachten Reaktionskomponenten konstant gehalten wird.

3. Verfahren nach Anspruch 1, dadurch gekennzeichnet, daß mindestens eines der erzeugten Reaktionsgemische zeitversetzt in die Nachmischzone (3, 35 ; 56, 60, 61 ; 75, 76) entlassen wird und nur während eines vorgegebenen Zeitintervalls mit einem weiteren Reaktionsgemisch in der Nachmischzone (3, 35 ; 56, 60, 61 ; 75, 76) vermischt wird.

4. Verfahren nach Anspruch 1, dadurch gekennzeichnet, daß mindestens zwei erzeugte Vorgemische zeitsynchron der Nachmischzone (3, 35 ; 56, 60, 61 ; 75, 76) zugeführt und miteinander vermischt werden.

5. Verfahren nach Anspruch 1, dadurch gekennzeichnet, daß die Dosiergeschwindigkeit mindestens von zwei erzeugten Reaktionsgemischen bei Einströmen in die Nachmischzone (3, 35 ; 56, 60, 61 ; 75, 76) konstant gehalten wird.

6. Verfahren nach Anspruch 1, dadurch gekennzeichnet, daß die Dosiergeschwindigkeit mindestens eines der erzeugten Reaktionsgemische während des Einbringens in die Nachmischzone (3, 35 ; 56, 60, 61 ; 75, 76) verändert wird.

## Claims

1. A method of producing shaped articles from multicomponent reaction mixtures which form, for example, polyurethane, epoxy resin, polyester resin or polyamide, flowable multi-component reaction mixtures being produced in at least two separate premixing zones (1, 2, 9 ; 51, 52 ; 71, 72), which flowable multi-component reaction mixtures are mixed together in a subsequent mixing zone (3, 35 ; 56, 60, 61 ; 75, 76), characterised in that in the premixing zones (1, 2, 9 ; 51, 52 ; 71, 72) different reactive multicomponent reaction mixtures are produced which then, in the subsequent mixing zone (3, 35 ; 56, 60, 61 ; 75, 76) are further reacted to give the desired end product.

2. Method according to Claim 1, characterised in that the metering ratio of at least the reaction component introduced into one of the premixing zones (1, 2, 9 ; 51, 52 ; 71, 72) is kept constant.

3. Method according to Claim 1, characterised in that at least one of the reaction mixtures produced is released into the subsequent mixing zone (3, 35 ; 56, 60, 61 ; 75, 76) after a time delay and is only mixed for a predetermined time interval with another reaction mixture in the subsequent mixing zone (3, 35 ; 56, 60, 61 ; 75, 76).

4. Method according to Claim 1, characterised in that at least two of the premixtures produced are supplied to the subsequent mixing zone (3, 35 ; 56, 60, 61 ; 75, 76) synchronously in time and mixed together.

5. Method according to Claim 1, characterised in that the metering rate at least of two reaction mixtures produced is kept constant as they flow into the subsequent mixing zone (3, 35 ; 56, 60, 61 ; 75, 76).

6. Method according to Claim 1, characterised in that the metering rate at least of one of the reaction mixtures produced is altered during the introduction into the subsequent mixing zone (3, 35 ; 56, 60, 61 ; 75, 76).

## Revendications

1. Procédé pour la production de pièces moulées en mélanges réactionnels multicomposés, qui forment par exemple du polyuréthanne, une résine époxyde, une résine polyester ou un polyamide, des mélanges réactionnels multicomposés fluides étant produits dans au moins deux zones de prémélangeage séparées (1, 2, 9 ; 51, 52 ; 71, 72), puis mélangés dans une zone de post-mélangeage (3, 35 ; 56, 60, 61 ; 75, 76), ledit procédé étant caractérisé en ce que des mélanges réactionnels multicomposés différents sont produits dans les zones de prémélangeage (1, 2, 9 ; 51, 52 ; 71, 72), puis soumis dans la zone de post-mélangeage (3, 35 ; 56, 60, 61 ; 75, 76) à une nouvelle réaction conduisant au produit final souhaité.

2. Procédé selon revendication 1, caractérisé en ce que le rapport de dosage du composé réactionnel introduit dans une des zones de prémélangeage (1, 2, 9 ; 51, 52 ; 71, 72) au moins est maintenu constant.

3. Procédé selon revendication 1, caractérisé en ce qu'au moins un des mélanges réactionnels produits est vidé avec décalage temporel dans la zone de post-mélangeage (3, 35 ; 56, 60, 61 ; 75, 76), dans laquelle il est mélangé avec un autre mélange réactionnel pendant un intervalle de temps prédéterminé seulement.

4. Procédé selon revendication 1, caractérisé en ce qu'au moins deux mélanges maîtres produits sont transmis simultanément à la zone de post-mélangeage (3, 35 ; 56, 60, 61 ; 75, 76), puis mélangés entre eux.

5. Procédé selon revendication 1, caractérisé en ce que la vitesse de dosage d'au moins deux mélanges réactionnels produits est maintenue constante pendant l'introduction dans la zone de post-mélangeage (3, 35 ; 56, 60, 61 ; 75, 76).

6. Procédé selon revendication 1, caractérisé en ce que la vitesse de dosage d'au moins un des mélanges réactionnels produits varie pendant l'introduction dans la zone de post-mélangeage (3, 35 ; 56, 60, 61 ; 75, 76).

FIG. 1

FIG. 2

FIG. 3